(19) Europäisches Patentamt
European Patent Office
Office européen des brevets

(11) **EP 1 051 628 B1**

(12) **EUROPÄISCHE PATENTSCHRIFT**

(45) Veröffentlichungstag und Bekanntmachung des Hinweises auf die Patenterteilung:
**22.06.2005 Patentblatt 2005/25**

(21) Anmeldenummer: **99957249.8**

(22) Anmeldetag: **28.09.1999**

(51) Int Cl.7: **G01P 5/00**, G03H 1/26

(86) Internationale Anmeldenummer:
**PCT/DE1999/003106**

(87) Internationale Veröffentlichungsnummer:
**WO 2000/019214 (06.04.2000 Gazette 2000/14)**

(54) **VERFAHREN ZUR OPTISCHEN DREIDIMENSIONALEN GESCHWINDIGKEITSMESSUNG VON STREUPARTIKELN**

METHOD FOR OPTICAL THREE-DIMENSIONAL VELOCIMETRY OF SCATTERED PARTICLES

PROCEDE DE MESURE OPTIQUE EN TROIS DIMENSIONS DE LA VITESSE DE PARTICULES VAGABONDES

(84) Benannte Vertragsstaaten:
**DE FR GB IT NL**

(30) Priorität: **28.09.1998 DE 19844367**
**27.09.1999 DE 19946262**

(43) Veröffentlichungstag der Anmeldung:
**15.11.2000 Patentblatt 2000/46**

(73) Patentinhaber: **ROBERT BOSCH GMBH**
**70442 Stuttgart (DE)**

(72) Erfinder: **SCHALLER, Johannes**
**D-70825 Korntal-Muenchingen (DE)**

(74) Vertreter: **Fleck, Hermann-Josef, Dr.-Ing. et al**
**Jeck Fleck Herrmann**
**Patentanwälte**
**Postfach 14 69**
**71657 Vaihingen/Enz (DE)**

(56) Entgegenhaltungen:
**US-A- 5 532 814**

- **WATT D W ET AL: "TURBULENT FLOW VISUALIZATION BY INTERFEROMETRIC INTEGRAL IMAGING AND COMPUTED TOMOGRAPHY" EXPERIMENTS IN FLUIDS,DT,SPRINGER VERLAG. BERLIN, Bd. 8, Nr. 6, 1. März 1990 (1990-03-01), Seiten 301-311, XP000126128 ISSN: 0723-4864**
- **FABRY E P: "3D HOLOGRAPHIC PIV WITH A FORWARD-SCATTERING LASER SHEET AND STEREOSCOPIC ANALYSIS" EXPERIMENTS IN FLUIDS,DT,SPRINGER VERLAG. BERLIN, Bd. 24, Nr. 1, 1. Januar 1998 (1998-01-01), Seiten 39-46, XP000777608 ISSN: 0723-4864**
- **BRUECKER CH: "3-D PIV VIA SPATIAL CORRELATION IN A COLOR-CODED LIGHT-SHEET" EXPERIMENTS IN FLUIDS,DT,SPRINGER VERLAG. BERLIN, Bd. 21, Nr. 4, 1. August 1996 (1996-08-01), Seiten 312-314, XP000722111 ISSN: 0723-4864 in der Anmeldung erwähnt**
- **DINKELACKER F ET AL: "DETERMINATION OF THE THIRD VELOCITY COMPONENT WITH PTA USING AN INTENSITY GRADED LIGHT SHEET" EXPERIMENTS IN FLUIDS,DT,SPRINGER VERLAG. BERLIN, Bd. 13, Nr. 5, 1. Januar 1992 (1992-01-01), Seiten 357-359, XP000316613 ISSN: 0723-4864 in der Anmeldung erwähnt**

**Beschreibung**

Die Erfindung bezieht sich auf ein Verfahren zur optischen dreidimensionalen Geschwindigkeitsmessung von Streupartikeln, bei dem ein die Streupartikel enthaltendes Strömungsfeld mittels einer Laser-Lichtschicht über eine bestimmte Zeitdauer kontinuierlich oder zu mindestens zwei diskreten Zeitpunkten belichtet und das von dem Strömungsfeld aufgenommene Streulicht zum Gewinnen der 3D-Geschwindigkeitsinformation ausgewertet wird.

Derartige Verfahren der optischen dreidimensionalen Geschwindigkeitsmessung von Tröpfchen sind bisher mit verschiedenen Ansätzen vorgeschlagen worden, wobei es insbesondere darum ging, die dritte Geschwindigkeitskomponente in Beobachtungsrichtung, d.h. senkrecht zu einer sogenannten Lichtschicht zu erfassen. Der häufigste Ansatz beruht dabei auf der Stereoskopie, wie er beispielsweise in M. P. Arroyo, C. A. Greated, "Stereoscopic particle velocimetry", Meas. Sci. Technol., 2, 1181-1186, 1991 E.P. Fabry, "3D holographic PIV with a forward-scattering laser sheet and spectroscopic analysis", Experiments in Fluids, 24, 39-46, 1998 beschrieben ist. Durch eine Betrachtung der ausleuchtenden Lichtschicht aus zwei Richtungen erhält man die Tiefeninformation.

Ein in F. Dinkelacker, M. Schäfer, W. Ketterle, J. Wolfrum, "Determination of the third velocity component with PTA using an intensity graded lightsheet", Exp. Fluids, 13, 357-359, 1992 beschriebener anderer Ansatz benutzt eine intensitätskodierte Lichtschicht, um aus der Helligkeit des abgebildeten Streukörpers auf dessen Position innerhalb der Lichtschicht zu schließen.

Eine in Ch. Brücker, "3-D PIV by spatial correlation in a colour-coded lightsheed", Exp. Fluids, 21, 312-314, 1996 untersuchte weitere Möglichkeit benutzt mehrere verschiedenfarbige, leicht gegeneinander versetzte Lichtschichten, um die dritte Ortskomponente aus der spektralen Zusammensetzung des Streulichts zu bestimmen.

Mit allen Verfahren wurden gewisse Erfolge erzielt, die erreichte Meßgenauigkeit für die dritte Geschwinidigkeitskomponente war aber stets deutlich schlechter als für die in der Ebene der Lichtschicht liegenden Komponenten. In den meisten Anwendungsfällen ist die Absolutgeschwindigkeit senkrecht zur Lichtschicht am kleinsten, so dass eine bessere Genauigkeit in dieser Richtung zu fordern ist.

Gleiche Genauigkeiten bei der Geschwindigkeitsbestimmung entlang aller drei Dimensionen bzw. Raumachsen lassen sich bisher nur durch Beobachtung aus zwei senkrecht aufeinanderstehenden Richtungen realisieren, womit aber ein relativ hoher Aufwand verbunden ist vgl. zum Beispiel D.W.Watt, C.M.Vest, "Turbulent flow vizualization by interferometric integral imaging and computed tomography", Experiments in Fluids, 0, 301-311, 1990.

Der Erfindung liegt die Aufgabe zugrunde, ein Verfahren der eingangs genannten Art bereitzustellen, mit dem es gelingt, bei nur einer Beobachtungsrichtung alle Geschwindigkeitskomponenten mit im wesentlichen derselben Genauigkeit zu bestimmen.

Diese Aufgabe wird mit den Merkmalen des Anspruchs 1 gelöst. Hiernach ist vorgesehen, dass das Messen der Geschwindigkeitskomponente einer entlang der Beobachtungsrichtung verlaufenden dritten Dimension interferometrisch erfolgt, indem Streulicht mit einer Referenzwelle überlagert und anschließend hinsichtlich seiner Phaseninformation ausgewertet wird. Die Auswertung erfolgt mit einer Referenzwelle. Mit diesen Maßnahmen wird die Geschwindigkeitskomponente in der senkrecht zur Lichtschicht verlaufenden dritten Dimension mit interferometrischer Genauigkeit erfassbar.

Eine vorteilhafte Maßnahme besteht darin, dass das Streulicht vor der interferometrischen Auswertung holographisch aufgezeichnet wird, um es bei hohen Strömungsgeschwindigkeiten der Beobachtung zugänglich zu machen. Bei der Auswertung des gestreuten Lichts oder des holographisch rekonstruierten gestreuten Lichts mit Laserlicht nur einer Wellenlänge wird eine eindeutige Messung dann erhalten, wenn vorgesehen ist, dass der Abstand der Belichtungszeitpunkte oder bei kontinuierlicher Belichtung die Zeitdauer kürzer gewählt wird als die Zeitdauer, in der der zu erwartende von den Streupartikel in der dritten Dimension zurückgelegte maximale Weg der Wellenlänge des Laserlichts entspricht.

Ein im Hinblick auf die zu erfassenden Geschwindigkeiten in der dritten Dimension praktisch beliebig großen Eindeutigkeitsbereich kann dadurch erzeugt werden, dass zwei oder mehr Messungen mit Laserlicht verschiedener diskreter Wellenlängen durchgeführt werden oder die Rekonstruktionswellenlänge der zur Ausleuchtung der holografischen Aufzeichnung dienenden Rekonstruktionswelle kontinuierlich verändert wird und dass die Bestimmung der Geschwindigkeit in der dritten Dimension auf der Grundlage einer oder mehrerer aus zwei Wellenlängen gebildeten synthetischen Wellenlänge nach der Beziehung

$$\Lambda = (\lambda_1 \cdot \lambda_2)/(\lambda_1 - \lambda_2)$$

gemäß der Mehrwellenlängeninterferometrie erfolgt. Alternativ kann die Rekonstruktionswellenlänge kontinuierlich verändert werden.

Die Erfindung wird nachfolgend anhand von Ausführungsbeispielen unter Bezugnahme auf die Zeichnungen näher erläutert. Es zeigen:

Fig. 1    eine schematische Darstellung einer Meßanordnung zur Auswertung eines Hologramms zum Erfassen einer Geschwindigkeitskomponente eines Tröpfchens in einer senkrecht zu einer Lichtschicht verlaufenden dritten Dimension,

Fig. 2 und 3     Helligkeiten zweier zu verschiedenen Zeitpunkten aufgenommener Tropfenbilder als Funktion der Phase einer Referenzwelle für zwei unterschiedliche Wellenlängen.

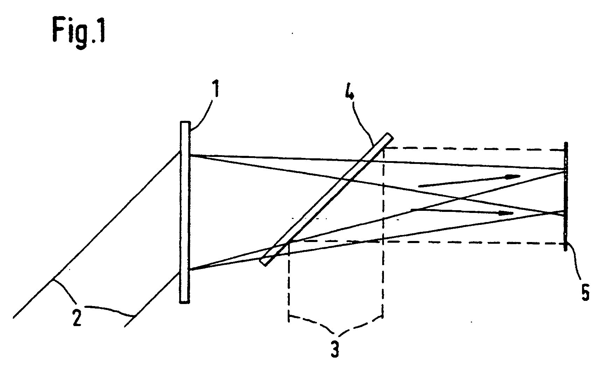

Die Fig. 1 zeigt schematisch eine Meßanordnung zur Erfassung einer senkrecht zu einer sogenannten Lichtschicht, d.h. in Beobachtungsrichtung verlaufenden dritten Dimension einer Tröpfchengeschwindigkeit. Hierzu ist das in an sich bekannter Weise (vgl. z. B. die eingangs erwähnten Literaturstellen) aufgenommene Hologramm 1 zur Ausleuchtung und Auswertung in den Strahlengang einer Rekonstruktionswelle 2 gebracht. Im weiteren Verlauf der Rekonstruktionswelle 2 ist ein Strahlteiler 4 angeordnet, mit dem der rekonstruierten Bildwelle eine Referenzwelle 3 überlagert wird, um ein Interferenzmuster zu erzeugen, das mittels eines Bildaufnehmers 5 oder einer Mattscheibe sichtbar gemacht wird.

Das hier vorgestellte Prinzip der dreidimensionalen Geschwindigkeitsmessung von Streupartikeln, wie z.B. Tröpfchen, Blasen oder Rußpartikeln, beruht zunächst auf der holographischen Aufzeichnung sogenannter PIV (Particle Image Velocimetry)-Daten, wie sie von verschiedenen Autoren demonstriert worden ist (siehe J.K. Schaller, C. G. Stojanoff, "Holographic investigations of a Diesel jet injected into a high-presure test chamber", Part. & Part. Syst. Charakterization, Vol. 13, pp. 196-204, 1996).

Das Neuartige an dem vorliegenden Verfahren ist die Überlagerung der rekonstruierten Bildwelle mit der zusätzlichen kohärenten Referenzwelle 3. In dem erhaltenen Interferenzmuster ist Information über den Abstand der rekonstruierten Bilder von dem Bildaufnehmer 5, wie etwa einer Kamera mit interferometrischer Genauigkeit enthalten.

Das vorliegende Verfahren kann in Analogie zu dem Begriff "Holographie" (ganz Schreiben) als "Hololexie" (ganz Lesen) bezeichnet werden. Bei der gewöhnlichen Holographie wird die Phaseninformation durch Überlagerung mit einer kohärenten Referenzwelle aufgezeichnet. Bei dem vorliegenden HIPIV (Holographic Interferometric Particle Image Velocimetry)-Verfahren wird die Phaseninformation, die die gesuchte Entfernungsinformation enthält, durch Überlagerung mit der kohärenten Referenzwelle 3 ausgelesen.

Der bis hierhin dargestellte Ansatz wird nur dann eindeutige Ergebnisse liefern, wenn eine Verschiebung der beiden Bilder eines Streukörpers zwischen zwei Belichtungen kleiner ist als die Wellenlänge des verwendeten Laserlichts. Allgemein kann für einen Abstand z eines Bildes von einer CCD-Kamera geschrieben werden:

$$z = \lambda_1 \, (n_i + \varphi_i/2\pi) = \lambda_i \cdot \phi_i \qquad (1)$$

mit einer Interferenzordnung $n_i$, einer Phase $\phi_i$ und einer Restphase $\varphi_i$ bei einer Wellenlänge $\lambda_i$.

Der kleine Eindeutigkeitsbereich kann im Rahmen der vorkommenden Geschwindigkeitskomponenten und praktisch realisierbaren Pulsabstände der Tröpfchen mit Hilfe der Mehrwellenlängeninterferometrie praktisch beliebig vergrößert werden.

Wenn ein Abstand z bei den Wellenlängen $\lambda_{1,2}$ die beiden Phasenterme $\phi_{1,2}$ aufweist, so erhält man ein eindeutiges Meßergebnis durch Kombination der beiden Ergebnisse:

$$z = (\phi_1 - \phi_2) \, \Lambda = \Delta\phi \cdot \Lambda.\mu/2 \qquad (2)$$

worin $\Lambda$ als synthetische Wellenlänge bezeichnet wird:

$$\Lambda = (\lambda_1 \cdot \lambda_2)/(\lambda_1 - \lambda_2) \qquad (3).$$

Der Faktor 1/2 berücksichtigt die Streckung/ Stauchung des rekonstruierten Bildes bei unterschiedlichen Wellenlängen. Der Faktor $\mu$ berücksichtigt das Verhältnis von Rekonstruktionswellenlänge zu Aufnahmewellenlänge.

Zum Testen des Verfahrens ist zunächst von einem aus einem rekonstruierten Hologramm mit PIV-Daten gewonnenen Teilbild ausgegangen worden. Zwei helle Punkte zeigen darin die beiden zu aufeinanderfolgenden Zeitpunkten gewonnenen Bilder eines Tropfens, die bei der Belichtung eines Tropfenfeldes entstanden sind. Aus der Verschiebung der Tropfenbilder in der Bildebene zueinander kann mit dem Zeitabstand zwischen den Belichtungen zunächst auf die Geschwindigkeitskomponente parallel zur ausleuchtenden Lichtschicht geschlossen werden.

Zwei weitere Teilbilder wurden aus dem Hologramm der PIV-Daten abgeleitet, indem das zunächst rekonstruierte Teilbild gemäß Fig. 1 mit der zusätzlichen Referenzwelle 3 überlagert wurde. In dem ersten durch Überlagerung mit der Referenzwelle 3 erhaltenen Teilbild war beispielsweise konstruktive interferenz für beide Tropfenbilder zu erkennen, wodurch die Tropfenbilder deutlich heller waren als in dem vor der Überlagerung vorhandenen Teilbild. Durch Variation der Phase der Referenzwelle 3 ist bei einem weiteren Teilbild destruktive Interferenz erzwungen worden, in dem die beiden Tropfenbilder nun als dunkle Flecken zu erkennen waren.

Zur Verifikation des Verfahrens wurde dasselbe Tropfenpaar in dem rekonstruierten Hologramm der PIV-Daten bei unterschiedlichen Wellenlängen analysiert. Bei jeder Wellenlänge wurde die Phase der Referenzwelle 3 monoton variiert, und es wurden ca. 20 Interferenzbilder aufgezeichnet. Es wurde deutlich der mehrfache Wechsel von konstruktiver und destruktiver Interferenz anhand der oszillierenden Helligkeiten der Tropfenbilder ersichtlich.

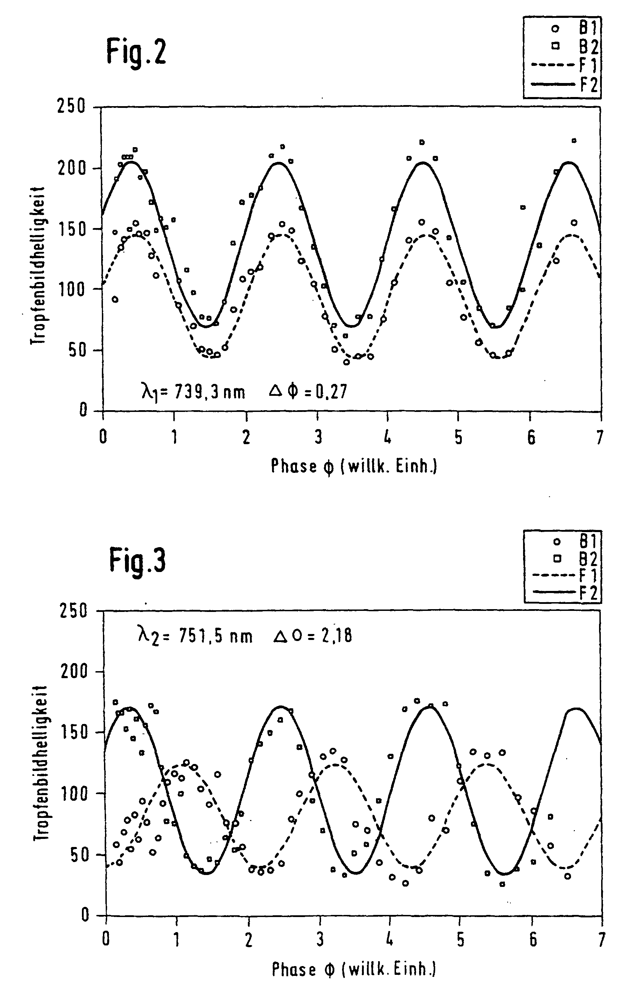

Derartige Bildserien wurden für verschiedene Wellenlängen aufgezeichnet und mit Hilfe der digitalen Bildverarbeitung weiter bearbeitet. Dazu wurden die einzelnen Tropfenpositionen lokalisiert und die Helligkeiten der Tropfenbilder durch Aufsummieren ihrer Grauwerte bestimmt. In den Fig. 2 und 3 sind die Helligkeiten der beiden Bilder eines Tropfens für zwei verschiedene Wellenlängen $\lambda 1 = 739{,}3$ nm und $\lambda 2 = 751{,}5$ nm als Funktion der Phase $\phi$ der Referenzwelle 3 dargestellt.

Die einzelnen Meßwerte wurden durch eine Funktion der Form

$$\text{Helligkeit} = P_1 \cdot \sin (P_2 \cdot \phi + P_3) + P_4 \qquad (4)$$

angepaßt. Die Differenz der Phasenterme $P_3$ der beiden Tropfenbilder wird als Phasendifferenz $\Delta\phi$ (siehe Gl. 2) bezeichnet und ist in den Fig. 2 und 3 für die beiden Wellenlängen angegeben.

In den Fig. 2 und 3 ist die oszillierende Helligkeit der Tropfenbilder klar zu erkennen. In Fig. 2 oszillieren die beiden Tropfenbilder nahezu in Phase ($\Delta\phi_1 = 0{,}27$). Bei der veränderten Wellenlänge gemäß Fig. 3 ist ein Phasenunterschied $\Delta\phi_2 = 2{,}18$ zu beobachten.

Die beiden in den Fig. 2 und 3 angegebenen Wellenlängen entsprechen einer synthetischen Wellenlänge nach Gl. 3 von $\Lambda = 45{,}54$ μm. Die Differenz der Phasentherme $\Delta\phi = \Delta\phi_1 - \Delta\phi_2 = 1{,}91$ führt nach Normalisierung mit $2\pi$ unter Verwendung von Gl. 3 zu einer Verschiebung des Tropfens um $\Delta z = 7$ μm entlang der Beobachtungsrichtung. Die Verschiebungen in den beiden anderen Dimensionen x und y werden aus einem einzelnen Videobild z.B. ohne Überlagerung mit der Referenzwelle 3 bestimmt und betrugen in dem angegebenen Beispiel $\Delta x = 37$ μm und $\Delta y = 36$ μm mit einem Fehler von etwa 10 %. Die dreidimensionale Tropfengeschwindigkeit kann aus diesen Daten mit dem Pulsabstand zwischen den beiden Belichtungen von 10μs bestimmt werden.

Die experimentellen Untersuchungen haben die Durchführbarkeit des Meßprinzips gezeigt, und durch eine entsprechende Automatisierung können die schon guten Meßergebnisse noch drastisch verbessert werden. Der experimentelle Fehler für eine problemangepaßte Wahl der Konstruktionswellenlängen ($\Lambda$ 37 μm) beträgt ca. 1 bis 2 μm.

## Patentansprüche

1. Verfahren zur optischen dreidimensionalen Geschwindigkeitsmessung von Streupartikeln, bei dem ein die Streupartikel enthaltendes Strömungsfeld mittels einer Laser-Lichtschicht über eine bestimmte Zeitdauer kontinuierlich oder zu mindestens zwei diskreten Zeitpunkten belichtet und das von dem Strömungsfeld aufgenommene Streulicht zum Gewinnen der 3D-Geschwindigkeitsinformation ausgewertet wird,
**dadurch gekennzeichnet,**
**dass** das Messen der Geschwindigkeitskomponente einer entlang der Beobachtungsrichtung verlaufenden dritten Dimension interferometrisch erfolgt, indem Streulicht mit einer Referenzwelle (3) überlagert und anschließend hinsichtlich seiner Phaseninformation ausgewertet wird.

2. Verfahren nach Anspruch 1,
**dadurch gekennzeichnet,**
**dass** das Streulicht vor der interferometrischen Auswertung holographisch aufgezeichnet wird.

3. Verfahren nach Anspruch 1 oder 2,
**dadurch gekennzeichnet,**
**dass** der Abstand der diskreten Belichtungszeitpunkte oder bei kontinuierlicher Belichtung die Zeitdauer kürzer gewählt wird als die Zeitdauer, in der der zu erwartende von den Streupartikeln in der dritten Dimension zurückgelegte maximale Weg der Wellenlänge des Laserlichts entspricht.

4. Verfahren nach Anspruch 1 oder 2,
**dadurch gekennzeichnet,**
**dass** zwei oder mehr Messungen mit Laserlicht verschiedener diskreter Wellenlängen durchgeführt werden oder eine Rekonstruktionswellenlänge der zur Ausleuchtung der holografischen Aufzeichnung dienenden Rekonstruktionswelle kontinuierlich verändert wird und
**dass** die Bestimmung der Geschwindigkeit in der dritten Dimension auf der Grundlage einer oder mehrerer aus zwei Wellenlängen gebildeten synthetischen Wellenlänge nach der Beziehung $\Lambda = (\lambda_1 \cdot \lambda_2)/(\lambda_1 - \lambda_2)$ gemäß der Mehrwellenlängeninterferometrie erfolgt.

## Claims

1. Method for optical three-dimensional velocimetry of scattered particles, in which a flow field containing the scattered particles is exposed by means of a laser lightsheet continuously over a specific time duration or at at least two discrete instants and the scattered light taken up by the flow field is evaluated in order to obtain the 3D velocity information,
**characterized**
**in that** the velocity component of a third dimension running along the observation direction is measured interferometrically by means of scattered light being superposed with a reference wave (3) and subsequently being evaluated with regard to its phase information.

**2.** Method according to Claim 1,
   **characterized**
   **in that** the scattered light is recorded holographically prior to the interferometric evaluation.

**3.** Method according to Claim 1 or 2,
   **characterized**
   **in that** the interval between the discrete exposure instants or, in the case of continuous exposure, the time duration is chosen to be shorter than the time duration in which the expected maximum distance covered by the scattered particles in the third dimension corresponds to the wavelength of the laser light.

**4.** Method according to Claim 1 or 2,
   **characterized**
   **in that** two or more measurements are carried out using laser light having different discrete wavelengths or a reconstruction wavelength of the reconstruction wave serving for illuminating the holographic recording is continuously varied, and
   **in that** the velocity in the third dimension is determined on the basis of one or more synthetic wavelength(s) formed from two wavelengths according to the relationship $\Lambda = (\lambda_1 \cdot \lambda_2)/(\lambda_1 - \lambda_2)$ in accordance with multiwavelength interferometry.

**Revendications**

**1.** Procédé de mesure optique en trois dimensions de la vitesse de particules vagabondes, selon lequel on éclaire un champ d'écoulement contenant des particules vagabondes à l'aide d'une couche de lumière laser pendant une durée déterminée, de manière continue, ou du moins en deux instants discrets et on exploite la lumière diffusée, reçue du champ d'écoulement pour obtenir des informations de vitesse en trois dimensions,
   **caractérisé en ce qu'**
   on mesure la composante de vitesse dans une troisième dimension dirigée suivant la direction d'observation par interférométrie en combinant à la lumière diffusée, une onde de référence (3) et en exploitant ensuite son information de phase.

**2.** Procédé selon la revendication 1,
   **caractérisé en ce qu'**
   on enregistre la lumière diffusée de manière holographique, avant l'exploitation interférométrique.

**3.** Procédé selon la revendication 1 ou 2,
   **caractérisé en ce que**

la distance entre les instants d'éclairage discrets ou la durée en cas d'éclairage continu, est choisie plus courte que la durée pendant laquelle la course maximale prévisible parcourue par les particules vagabondes dans la troisième dimension, correspond à la longueur d'onde de la lumière laser.

**4.** Procédé selon la revendication 1 ou 2,
   **caractérisé en ce qu'**
   on effectue deux ou plusieurs mesures avec de la lumière laser à des longueurs d'onde discrètes, différentes, ou on modifie en continu une longueur d'onde de reconstruction servant à l'onde de reconstruction éclairant l'enregistrement holographique, et
   on détermine la vitesse dans la troisième dimension en s'appuyant sur la longueur d'onde de synthèse formée d'une ou plusieurs des deux longueurs d'onde selon la relation $\Lambda = (\lambda_1 \cdot \lambda_2)/(\lambda_1 - \lambda_2)$, suivant l'interférométrie de plusieurs longueurs d'ondes.

# Fig.1

Fig.2

$\lambda_1 = 739,3\,nm \quad \triangle\phi = 0,27$

Fig.3

$\lambda_2 = 751,5\,nm \quad \triangle O = 2,18$